# EUROPÄISCHE PATENTSCHRIFT

(11) **EP 1 060 933 B1**
(45) Veröffentlichungstag und Bekanntmachung des Hinweises auf die Patenterteilung: **22.01.2003**
(21) Anmeldenummer: 00109489.5
(22) Anmeldetag: 04.05.2000
(51) Int. Cl.: B60K 11/08, B29C 44/12

(54) **Verfahren und Vorrichtung zur Herstellung eines langgestreckten geschlossenen Kanals innerhalb eines Karosseriehohlraumes**
Method and apparatus for manufacturing an elongated closed channel inside a body cavity
Procédé et dispositif de fabrication d'un canal allongé dans une cavité du chassis

(30) Priorität: 12.06.1999 DE 19926861
(43) Veröffentlichungstag der Anmeldung: 20.12.2000
(73) Patentinhaber: Dr.Ing. h.c.F. Porsche Aktiengesellschaft, 70435 Stuttgart (DE)
(72) Erfinder: Lehmann, Klaus-Peter, 75417 Mühlacker (DE); Reichling, Hermann, 70173 Stuttgart (DE); Rogner, Gert, 75196 Remchingen (DE)

(56) Entgegenhaltungen:
- DE-U- 8 427 918
- US-A- 5 642 914

## Beschreibung

Die Erfindung bezieht sich auch ein Verfahren zur Herstellung eines langgestreckten geschlossenen Kanals innerhalb eines Karosseriehohlraumes nach dem Patentanspruch 1 und einen damit hergestellten Kanal.

Aus der DE 84 27 918 U1 geht ein langgestreckter geschlossener Kanal innerhalb eines Karosseriehohlraumes hervor, wobei der Karosseriehohlraum aus zumindest zwei Karosserieteilen zusammengesetzt ist und der Kanal durch ein rohrförmiges geschlossenes Führungselement aus Kunststoff gebildet wird.

Bei dieser Anordnung wird zuerst die Rohkarosserie mit dem Karosseriehohlraum hergestellt, danach durchläuft die Rohkarosserie den kompletten Lackierprozeß und anschließend wird vom hinteren offenen Endbereich des Karosseriehohlraumes her das langgestreckte rohrförmige Führungselement eingesetzt und an beiden Enden mit angrenzenden Bauteilen verbunden. Das vordere Ende des rohrförmigen Führungselementes wird auf einen aufbaufesten Anschlußstutzen eines Karosserieteiles aufgesteckt und durch zusätzliche Verbindungsmittel mit dem Anschlußstutzen verbunden.

Aufgabe der Erfindung ist es, einen durch ein rohrförmiges Führungselement aus Kunststoff gebildeten, langgestreckten geschlossenen Kanal innerhalb eines Karosseriehohlraumes zu bilden, wobei die Endbereiche des Führungselementes ohne zusätzliche Verbindungsmittel in einfacher Weise dichtend an angrenzende Karosserieteile anschließbar sind.

Diese Aufgabe wird erfindungsgemäß durch die Merkmale der Ansprüche 1 und 3 gelöst. Weitere vorteilhafte Merkmale beinhalten die Unteransprüche.

Die mit der Erfindung hauptsächlich erzielten Vorteile bestehen darin, daß durch das Aufquellen der endseitig am Führungselement vorgesehenen Schaumdichtungen beim Lackierprozeß der Karosserie ein dichter Verbund des Kanals zum umgebenden Luftraum innerhalb des Karosseriehohlraumes gewährleistet ist und daß keine zusätzlichen Verbindungsmittel zwischen den Enden des rohrförmigen Führungselementes und den angrenzenden Karosserieteilen benötigt werden.

Ein derartig abgeschotteter Kanal läßt sich zur Luftzuführung zu einem dahinterliegenden Kühler, als Kabelkanal oder zur Führung eines flüssigen Mediums verwenden. Örtlich angeformte Laschen am Führungselement lassen sich auf einfache Weise mittels Schraubverbindung an angrenzenden Karosserieteilen festlegen, wodurch das Führungselement lagerichtig positioniert ist. Durch die dichte Abschottung des Kanals läßt sich der das Führungselement umgebende Luftraum innerhalb des Karosseriehohlraumes beispielsweise zur Innenraumentlüftung des Fahrgastraumes heranziehen.

Ein Ausführungsbeispiel der Erfindung ist in der Zeichnung dargestellt und wird im folgenden näher beschrieben.

Es zeigen
- Fig. 1: eine Teilseitenansicht eines Kraftfahrzeuges mit einem langgestreckten geschlossenen Kanal innerhalb eines Karosseriehohlraumes,

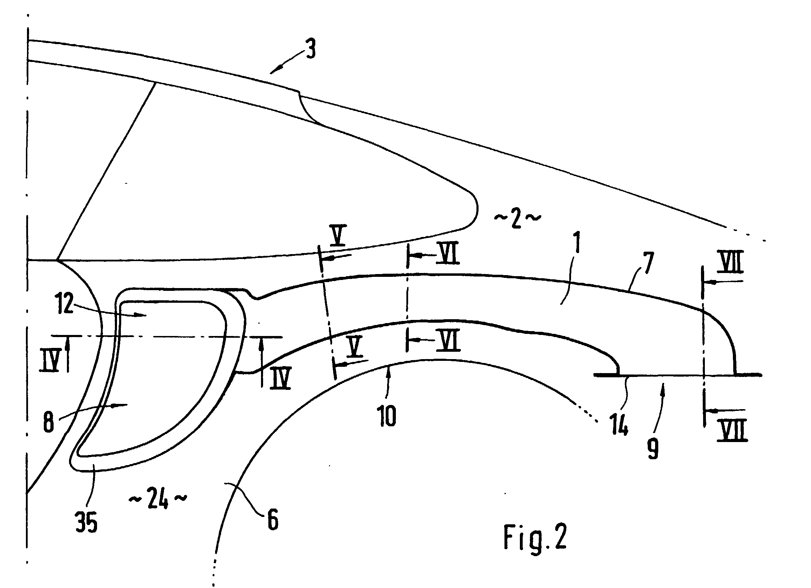

- Fig. 2: eine Einzelheit X der Fig. 1 in größerer Darstellung,
- Fig. 3: in Explosionsdarstellung die Bauteile eines Kanals sowie eines nachfolgenden Kühlers samt Halterahmen,
- Fig. 4: einen Schnitt nach der Linie IV-IV der Fig. 2,
- Fig. 5: einen Schnitt nach der Linie V-V der Fig. 2,
- Fig. 6: einen Schnitt nach der Linie VI-VI der Fig. 2 und

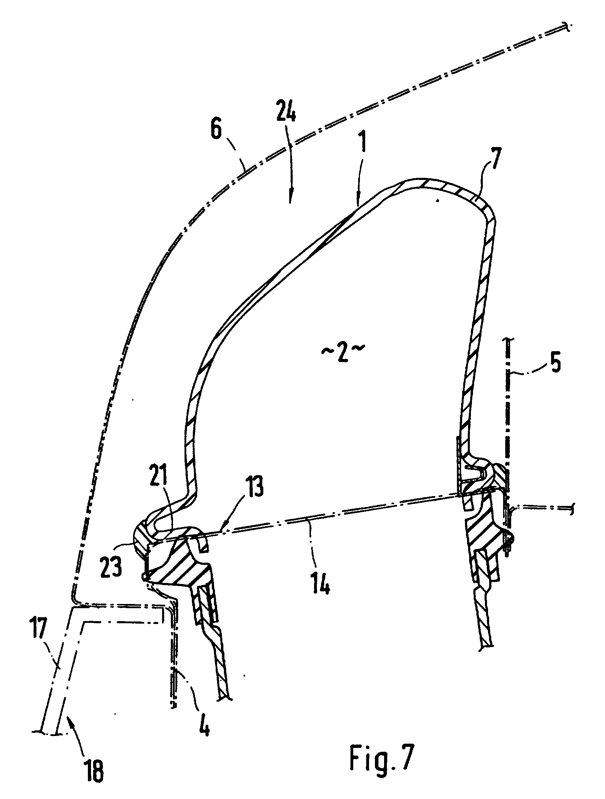

- Fig. 7: einen Schnitt nach der Linie VII-VII der Fig. 2.

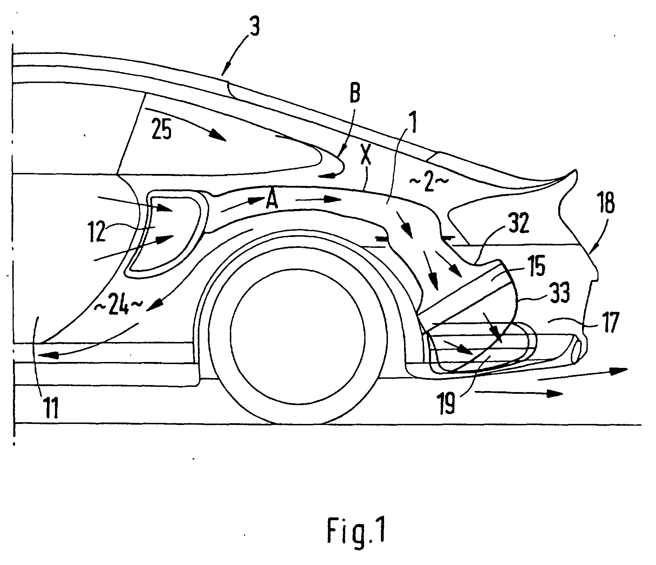

In Fig. 1 ist ein langgestreckter geschlossener Kanal 1 innerhalb eines Karosseriehohlraumes 2 eines Fahrzeuges 3 dargestellt, wobei sich der Karosseriehohlraum 2 aus zumindest zwei Karosserieteilen 4, 5, 6 zusammensetzt. Der Kanal 1 wird durch ein langgestrecktes rohrförmiges Führungselement 7 gebildet, das lediglich an seinen beiden Enden 8, 9 offen ausgebildet ist. Das rohrförmige Führungselement 7 wird durch ein Blasteil oder ein Spritzgußteil aus einem geeigneten Kunststoff gebildet (z.B. glasfaserverstärktes Polyamid), wobei der Kunststoff zumindest bis etwa 200°C wärmebeständig ist.

Im gezeigten Ausführungsbeispiel erstreckt sich der Karosseriehohlraum 2 oberhalb eines heckseitigen Radhauses 10 und setzt sich aus einer oberen Radhauswandung 4, einem inneren Seitenteil 5 und einem ein Karosserieaußenhautteil bildenden Fondseitenteil 6 zusammen. Benachbart dem hinteren Rand einer vorgelagerten seitlichen Tür 11 ist am aufrechten Fondseitenteil 6 eine erste Öffnung 12 des Kanals 1 vorgesehen, die in der Seitenansicht gesehen annähernd sichelförmig ausgebildet ist. An einem etwa horizontal oder leicht schräg verlaufenden Wandabschnitt 13 der oberen Radhauswandung 4 ist eine zweite Öffnung 14 des Kanals 1 vorgesehen. Der Karosseriehohlraum 2 könnte jedoch auch durch einen außenliegenden Schweller, einen Mitteltunnel oder dergleichen gebildet werden.

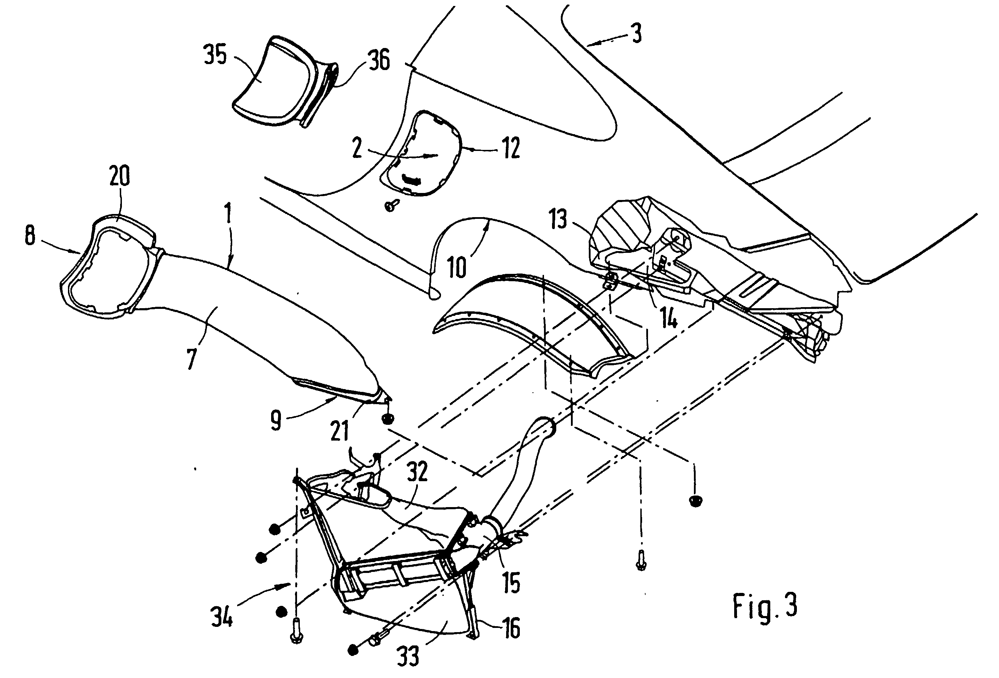

Im Ausführungsbeispiel dient der Kanal 1 zur Luftzuführung für einen dahinterliegend angeordneten Kühler 15, wobei der Kühler als Ladeluftkühler oder dergleichen ausgebildet sein kann. Der schräg im Raum liegende Kühler 15 ist mittels eines Halterahmens 16 an aufrechten Karosserieteilen befestigt und zwar in Fahrtrichtung gesehen hinter den hinteren Radhäusern 10 (Fig. 3). Nach außen hin wird der Kühler 15 durch seitliche Abschnitte 17 einer Stoßfängerverkleidung 18 abgedeckt, die beispielsweise aus elastischem Werkstoff gefertigt sein kann. Im unteren Randbereich der seitlichen Abschnitte 17 der Stoßfängerverkleidung 8 ist eine seitliche Austrittsöffnung 19 für den durch den Kühler 15 hindurchgeführten Kühlluftstrom vorgesehen.

Erfindungsgemäß sind beide Enden 8, 9 des aus Kunststoff gefertigten Führungselementes 7 mit außenliegenden umlaufenden Flanschen 20, 21 versehen, wobei die Flansche 20, 21 korrespondierende Öffnungen 12, 14 an den Karosserieteilen 4, 6 überragen. Zwischen den endseitigen Flanschen 20, 21 und den angrenzenden Karosserieteilen 4, 6 ist jeweils eine umlaufende Schaumdichtung 22, 23 angeordnet, die während des Lackierprozeßes im Trocknerofen bei einer definierten Temperatur aufquillt und somit einen dichten Verbund zwischen dem Führungselement 7 und den Karosserieteilen 4, 6 bildet, so daß der Kanal 1 gegenüber dem angrenzenden Luftraum 24 innerhalb des Karosseriehohlraumes 2 abgedichtet ist.

Im Ausführungsbeispiel wird der Luftraum 24 des Karosseriehohlraumes 2 zur Innenraumentlüftung 25 des Fahrzeuges herangezogen. Der Luftstrom B der Innenraumentlüftung 25 verläuft entgegengesetzt zum Luftstrom A der Kühlluftzuführung (siehe Fig. 1).

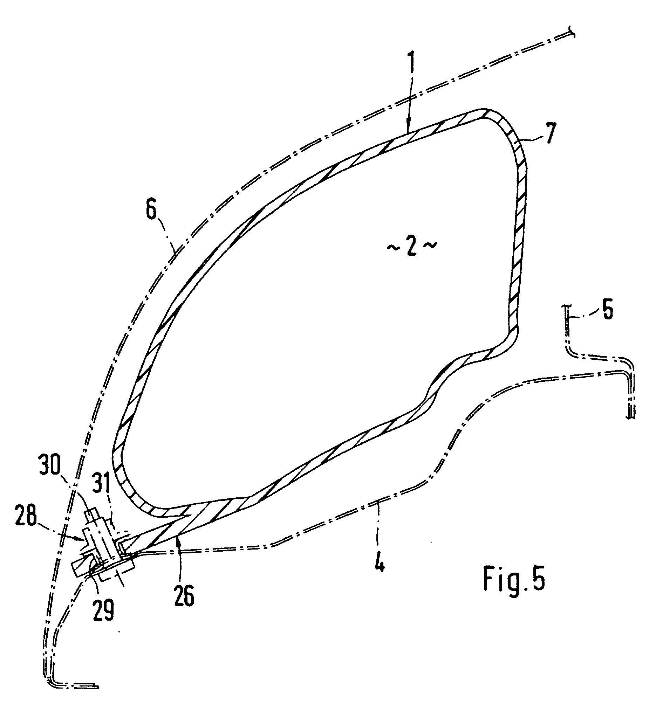

Der Kanal 1 innerhalb des Karosseriehohlraumes 2 wird wie folgt gebildet. Zuerst wird das rohrförmige geschlossene Führungselement 7 aus Kunststoff im Blas- oder Spritzgußverfahren hergestellt, wobei an beiden Enden 8, 9 des Führungselementes 7 außenliegende Flansche 20, 21 ausgebildet sind, die die korrespondierenden Öffnungen 12, 14 an den angrenzenden Karosserieteilen 4, 6 zumindest bereichsweise übergreifen. Danach werden auf die beiden endseitigen Flansche 20, 21 des Führungselementes 7 jeweils umlaufende Schaumdichtungen 22, 23 vormontiert und zwar auf der dem angrenzenden Karosserieteil 4, 6 zugewandeten Seite. Anschließend wird das rohrförmige geschlossene Führungselement 7 in zumindest ein erstes Karosserieteil 4, 5 des Karosseriehohlraumes 2 eingesetzt und zwar vor dem Aufsetzen und Verbinden des zweiten Karosserieteiles 6. Zum lagerichtigen Positionieren des Führungselementes 7 innerhalb des Karosseriehohlraumes 2 sind an der Außenseite des Führungselementes 7 mehrere abgestellte Haltelaschen 26, 27 ausgebildet, die jeweils über eine Schraubverbindung 28 an dem ersten Karosserieteil 4, 5 des Karosseriehohlraumes 2 festlegbar sind (Fig. 5 u. 6).

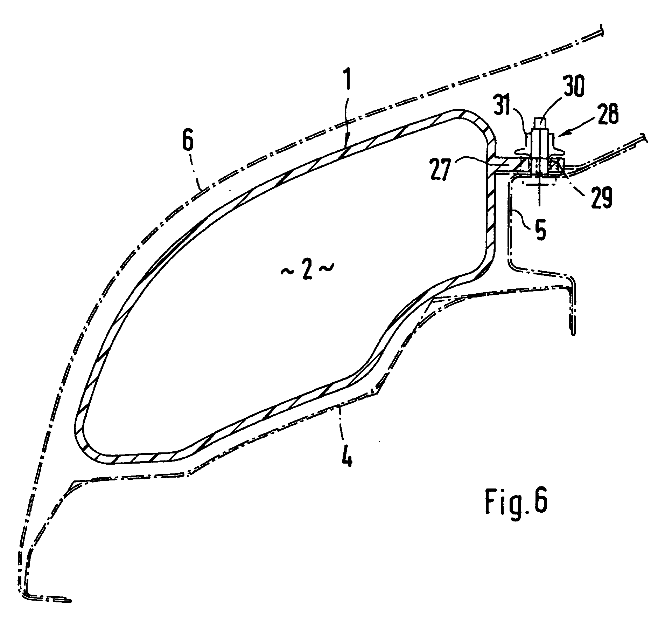

In Fig. 5 ist die Festlegung des Führungselementes 7 an der oberen Radhauswandung 4 dargestellt, wogegen in Fig. 6 das Führungselement 7 auf der gegenüberliegenden Seite am inneren Seitenteil 5 in Lage gehalten ist. Beide Haltelaschen 26, 27 weisen jeweils Öffnungen oder Schlitzöffnungen 29 auf, die einen am Karosserieteil 4, 5 feststehenden angeordneten Schraubbolzen 30 umgreifen. Auf den Schraubbolzen 30 ist jeweils eine Mutter 31 zur Festlegung des Führungselementes 7 aufgedreht.

Nach dem Einsetzen und Verbinden des Führungselementes 7 in den Karosseriehohlraum 2 wird das zweite Karosserieteil 6, in diesem Falle das Fondseitenteil, aufgesetzt und durch Schweißen, Schrauben oder dergleichen mit der Rohkarosserie verbunden. Danach durchlaufen die Rohkarosserie und das innenliegende Führungselement 7 zusammen sämtliche Lackierprozesse, wobei durch die im KTL-Trockner (Kathodischer Tauchlack Trockner) auftretenden Temperaturen (ca. 185°C) die an den Flanschen 20, 21 des Führungselementes 7 vormontierten Schaumdichtungen 22, 23 aufquellen und somit der Kanal 1 gegenüber dem umgebenden Luftraum 24 des Karosseriehohlraumes 2 abgedichtet ist. Der Kanal 1 könnte jedoch auch als Kabelkanal oder zur Führung eines flüssigen Mediums (z.B. Wasser) dienen.

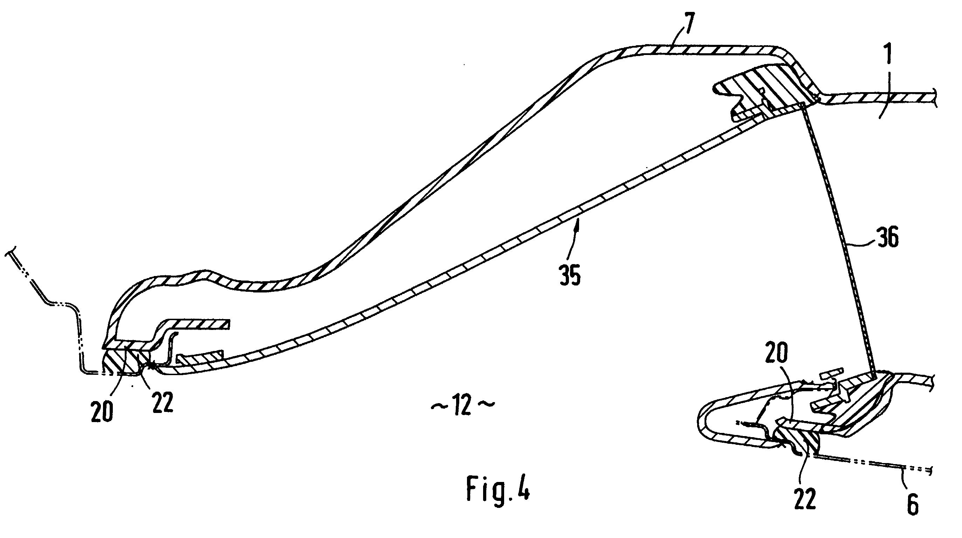

Gemäß Fig. 4 ist der erste endseitige Flansch 20 des Führungselementes 7 unter Zwischenschaltung der Schaumdichtung 22 an die Innenseite des aufrechten Fondseitenteiles 6 angeschlossen, wogegen der zweite randseitige Flansch 21 des Führungselementes 7 unter Zwischenschaltung der Schaumdichtung 23 an die Oberseite der Radhauswandung 4 herangeführt ist. Zur Optimierung der Kühlluftführung erstreckt sich von der Öffnung 14 der Radhauswandung 4 zum Kühler 15 ein weiteres Luftführungselement 32 und zwischen Kühler 15 und Luftaustrittsöffnung 19 ist eine Luftführungshutze 33 vorgesehen.

Der Kühler 15 bildet zusammen mit dem Halterahmen 16, dem Luftführungselement 32 und der Luftführungshutze 33 eine vorgefertigte Baueinheit 34, die mittels Befestigungsschrauben am Aufbau befestigbar ist.

Von der Fahrzeugaußenseite her ist in die erste Öffnung 12 des Fondseitenteiles 6 eine Rosette 35 eingesetzt, wobei an einem hinteren Endbereich der Rosette ein Lufteinlaßgitter 36 vorgesehen ist. Das rohrförmige Führungselement 7 kann - falls erforderlich - an beiden Enden bis zum Aufquellen der Schaumdichtungen 22, 23 zusätzlich fixiert werden.

## Patentansprüche

1. Verfahren zur Herstellung eines langgestreckten geschlossenen Kanals innerhalb eines Karosseriehohlraumes eines Fahrzeuges, wobei der Karosseriehohlraum aus zumindest zwei Karosserieteilen zusammengesetzt ist, und der Kanal durch ein rohrförmiges Führungselement aus Kunststoff gebildet wird, wobei das Führungselement (7) an beiden Enden (8, 9) mit außenliegenden umlaufenden Flanschen (20, 21) versehen wird, zwischen den Flanschen (20, 21) und den Karosserieteilen (4, 6) jeweils eine umlaufende Schaumdichtung (22, 23) angeordnet wird, die während des Lackierprozeßes im Trocknerofen bei einer definierten Temperatur aufquillt und einen dichten Verbund zwischen den Karosserieteilen (4, 6) und dem Führungselement (7) bildet.

2. Verfahren nach Anspruch 1, **gekennzeichnet durch** die folgenden Verfahrensschritte:
a) Herstellung des rohrförmigen geschlossenen Führungselementes (7) aus Kunststoff im Blas- oder Spritzgußverfahren, wobei die endseitigen Flansche (20, 21) des Führungselementes (7) zugeordnete Öffnungen (12, 14) an den Karosserieteilen (4, 6) überragen.
b) Aufbringen von je einer umlaufenden Schaumdichtung (22, 23) am jeweiligen endseitigen Flansch (20, 21) des Führungselementes (7) auf der dem angrenzenden Karosserieteil (4, 6) zugewandten Seite.
c) Einsetzen und Verbinden des rohrförmigen Führungselementes (7) an zumindest einem ersten Karosserieteil (4, 5) des Karosseriehohlraumes (2) vor dem Aufsetzen und Verbinden des zweiten Karosserieteiles (6).
d) Karosserie durchläuft zusammen mit dem innenliegenden Führungselement (7) sämtliche Lackierprozesse, wobei **durch** die in einem KTL-Trockner auftretenden Temperaturen die Schaumdichtungen (22, 23) aufquellen und somit der Kanal (1) gegenüber dem umgebenden Luftraum (24) des Karosseriehohlraumes (2) abgedichtet ist.

3. Kanal in einem Fahrzeug, der innerhalb eines aus zumindest zwei Karosserieteilen zusammengestzten Karosseriehohlraumes angeordnet ist und durch ein rohrförmiges Führungselement aus Kunststoff gebildet wird, wobei das Führungselement (7) an beiden Enden (8, 9) mit außenliegenden umlaufenden Flanschen (20, 21) versehen ist und zwischen den Flanschen (20, 21) und den Karosserieteilen (4, 6) jeweils eine umlaufende Schaumdichtung (22, 23) angeordnet ist, die während eines Lackierprozeßes im Trocknerofen bei einer definierten Temperatur aufquillt und einen dichten Verbund zwischen den Karosserieteilen (4, 6) und dem Führungselement (7) bildet.

4. Kanal nach Anspruch 3, **dadurch gekennzeichnet, daß** der Kanal (1) zur Luftzuführung für einen dahinterliegenden Kühler (15) dient.

5. Kanal nach Anspruch 3, **dadurch gekennzeichnet, daß** der Kanal (1) als Kabelkanal dient.

6. Kanal nach Anspruch 3, **dadurch gekennzeichnet, daß** der Kanal (1) zur Führung eines flüssigen Mediums dient.

7. Fahrzeug mit einem Kanal nach Anspruch 3, wobei der Karosseriehohlraum (2) durch einen Fahrzeugschweller gebildet wird.

8. Fahrzeug mit einem Kanal nach Anspruch 3, wobei sich der Karosseriehohlraum (2) oberhalb eines Radhauses (10) der Karosserie erstreckt.

9. Fahrzeug mit einem Kanal nach Anspruch 3, wobei an der Außenseite des Führungselementes (7) mehrere abgestellte Haltelaschen (26, 27) ausgebildet sind, die jeweils über eine Schraubverbindung (28), eine Clipsverbindung oder dgl. an einem ersten Karosserieteil (4, 5) des Karosseriehohlraumes (2) festlegbar sind.

10. Fahrzeug mit einem Kanal nach einem der Ansprüch 3-9, wobei der Karosseriehohlraum (2) durch ein außenliegendes Fondseitenteil (6) eine das Radhaus (10) nach oben hin begrenzende Radhauswandung (4) und ein Seitenteil (5) innen gebildet wird, wobei am Fondseitenteil (6) eine erste Öffnung (12) und an der Radhauswandung (4) eine zweite Öffnung (14) vorgesehen sind.

11. Fahrzeug mit einem Kanal nach einem der Ansprüche 3-10, wobei der den Kanal (1) umgebende Bereich innerhalb des Karosseriehohlraumes (2) zur Innenraumentlüftung (25) des Fahrzeuges herangezogen wird.

## Claims

1. A method of producing an elongate closed duct inside a bodywork cavity of a vehicle, wherein the bodywork cavity is assembled from at least two bodywork parts, and the duct is formed by a tubular guide member of plastics material, wherein the guide member (7) is provided at both ends (8, 9) with continuous flanges (20, 21) situated on the outside, a respective continuous foam seal (22, 23), which swells at a defined temperature during the painting process in the drying furnace and forms a tight bond between the bodywork parts (4, 6) and the guide member (7), is arranged in each case between the flanges (20, 21) and the bodywork parts (4, 6).

2. A method according to Claim 1, **characterized by** the following method steps:
a) producing the closed tubular guide member (7) from plastics material in the blow-moulding or injection-moulding process, wherein the end flanges (20, 21) of the guide member (7) project beyond associated openings (12, 14) in the bodywork parts (4, 6);
b) attaching one continuous foam seal (22, 23) in each case to the respective end flange (20, 21) of the guide member (7) on the side facing the adjacent bodywork part (4, 6);
c) inserting and connecting the tubular guide member (7) to at least one first bodywork part (4, 5) of the bodywork cavity (2) before positioning and connecting the second bodywork part (6);
d) the bodywork together with the guide member (7) situated on the inside passes through all the painting processes, wherein the foam seals (22, 23) swell as a result of the temperatures occurring in a cathode dip-painting dryer and so the duct (1) is sealed off from the surrounding air cavity (24) of the bodywork cavity (2).

3. A duct in a vehicle, which [duct] is arranged inside a bodywork cavity assembled from at least two bodywork parts and is formed by a tubular guide member of plastics material, wherein the guide member (7) is provided at both ends (8, 9) with continuous flanges (20, 21) situated on the outside and a respective continuous foam seal (22, 23), which swells at a defined temperature during a painting process in the drying furnace and forms a tight bond between the bodywork parts (4, 6) and the guide member (7), is arranged in each case between the flanges (20, 21) and the bodywork parts (4, 6).

4. A duct according to Claim 3, **characterized in that** the duct (1) is used for the air supply for a radiator (15) arranged downstream thereof.

5. A duct according to Claim 3, **characterized in that** the duct (1) is used as a cable duct.

6. A duct according to Claim 3, **characterized in that** the duct (1) is used for conveying a fluid medium.

7. A vehicle with a duct according to Claim 3, wherein the bodywork cavity (2) is formed by a vehicle sill.

8. A vehicle with a duct according to Claim 3, wherein the bodywork cavity (2) extends above a wheel arch (10) of the bodywork.

9. A vehicle with a duct according to Claim 3, wherein a plurality of projecting holding plates (26, 27), which can be fastened to a first bodywork part (4, 5) of the bodywork cavity (2) in each case by way of a bolt connexion (28), a clip connexion or the like, are formed on the outside of the guide member (7).

10. A vehicle with a duct according to one of Claims 3 to 9, wherein the bodywork cavity (2) is formed by a rear side part (6) situated on the outside, a wheel-arch panel (4) bounding the wheel arch (10) at the top and a side part (5) on the inside, wherein a first opening (12) is provided on the rear side part (6) and a second opening (14) is provided on the wheel-arch panel (4).

11. A vehicle with a duct according to one of Claims 3 to 10, wherein the region surrounding the duct (1) inside the bodywork cavity (2) is used for ventilating the interior (25) of the vehicle.

## Revendications

1. Procédé de fabrication d'un canal allongé fermé à l'intérieur d'un espace creux de carrosserie d'un véhicule, dans lequel l'espace creux de carrosserie est réalisé par au moins deux pièces de carrosserie, le canal étant formé par un élément de guidage en forme de tube et en matière plastique, l'élément de guidage (7) étant doté au niveau des deux extrémités (8, 9) de brides circulaires extérieures (20, 21), un joint en mousse (22, 23) étant disposé de manière à s'étendre respectivement entre les brides (20, 21) et les pièces de carrosserie (4, 6), lequel joint gonfle lors du processus de peinture dans un four de séchage à une température définie et forme une liaison étanche entre les pièces de carrosserie (4, 6) et l'élément de guidage (7).

2. Procédé selon la revendication 1, **caractérisé par** les étapes de procédé suivantes consistant à :
a) fabriquer l'élément de guidage fermé en forme de tube (7) à partir de matière plastique selon un processus de soufflage ou de moulage par injection, moyennant quoi les brides latérales d'extrémité (20, 21) de l'élément de guidage (7) dépassent des ouvertures correspondantes (12, 14) au niveau des pièces de carrosserie (4, 6).
b) Mettre en place chacun des joints en mousse (22, 23) au niveau de la bride latérale d'extrémité respective (20, 21) de l'élément de guidage (7) sur le côté tourné vers la pièce de carrosserie adjacente (4, 6).
c) Fixer et relier l'élément de guidage en forme de tube (7) sur au moins une première pièce de carrosserie (4, 5) de l'espace creux de carrosserie (2) avant la mise en place et la liaison de la seconde pièce de carrosserie (6).
d) Faire passer la carrosserie conjointement avec l'élément de guidage intérieur (7) par tous les processus de peinture, les joints en mousse (22, 23) gonflent à des températures produites par un séchoir KTL et le canal (1) est ainsi étanché face à l'espace d'air environnant (24) de l'espace creux de carrosserie (2).

3. Canal dans un véhicule, qui est disposé à l'intérieur d'un espace creux de carrosserie composé d'au moins deux pièces de carrosserie, et qui est formé par un élément de guidage en forme de tube et en matière plastique, moyennant quoi l'élément de guidage (7) est pourvu au niveau des deux extrémités (8, 9) de brides circulaires extérieures (20, 21) et moyennant quoi un joint en mousse circulaire (22, 23) est disposé de manière à s'étendre respectivement entre les brides (20, 21) et les pièces de carrosserie (4, 6), lequel joint en mousse gonfle à une température définie pendant un processus de peinture dans un four de séchage et forme une liaison étanche entre les pièces de carrosserie (4, 6) et l'élément de guidage (7).

4. Canal selon la revendication 3, **caractérisé en ce que** le canal (1) sert à acheminer de l'air pour un radiateur (15) situé derrière.

5. Canal selon la revendication 3, **caractérisé en ce que** le canal (1) sert de goulotte à câbles.

6. Canal selon la revendication 3, **caractérisé en ce que** le canal (1) sert à l'acheminement d'un milieu liquide.

7. Véhicule doté d'un canal selon la revendication 3, dans lequel l'espace creux de carrosserie (2) est formé par un bas de marche de véhicule.

8. Véhicule doté d'un canal selon la revendication 3, dans lequel l'espace creux de carrosserie (2) s'étend au-dessus d'un logement de roue (10) de la carrosserie.

9. Véhicule doté d'un canal selon la revendication 3, dans lequel plusieurs colliers de maintien (26, 27) mis en place sur le côté extérieur de l'élément de guidage (7) sont conçus, et peuvent être respectivement fixés à une première pièce de carrosserie (4, 5) de l'espace creux de carrosserie (2) au moyen d'un raccord à vis (28), un raccord à clip ou analogues.

10. Véhicule doté d'un canal selon l'une quelconque des revendications 3 à 9, dans lequel l'espace creux de carrosserie (2) est formé à l'intérieur par une aile arrière extérieure (6), une paroi de logement de roue (4) délimitant le logement de roue (10) par le haut et une partie latérale (5), une première ouverture (12) étant prévue au niveau de l'aile arrière (6) et une seconde ouverture (14) étant prévue au niveau de la paroi de logement de roue (4).

11. Véhicule doté d'un canal selon l'une quelconque des revendications 3 à 10, dans lequel la zone entourant le canal (1) est attirée à l'intérieur de l'espace creux de carrosserie (2) en vue de l'aération intérieure (25) du véhicule.
